# FASCICULE DE BREVET EUROPEEN

(11) **EP 3 546 108 B1**
(45) Date de publication et mention de la délivrance du brevet: **01.05.2024**
(21) Numéro de dépôt: 19166048.9
(22) Date de dépôt: 29.03.2019
(51) Int. Cl.: B23K 26/03, B23K 26/14, B23K 26/38

(54) **SYSTÈME DE DÉCOUPE LASER**
LASERSCHNEIDESYSTEM
LASER CUTTING SYSTEM

(30) Priorité: 29.03.2018 FR 1852763
(43) Date de publication de la demande: 02.10.2019
(73) Titulaire: Commissariat à l'énergie atomique et aux énergies alternatives, 75015 Paris (FR)
(72) Inventeur: CHAGNOT, Christophe, 78140 VELIZY-VILLACOUBLAY (FR); FONDANT, Gilles, 91380 CHILLY-MAZARIN (FR); SIMON, François, 91190 GIF SUR YVETTE (FR)
(74) Mandataire: Brevalex

(56) Documents cités:
- WO-A1-2013/053832
- FR-A1- 2 982 185
- JP-A- H11 179 570

## Description

### DOMAINE TECHNIQUE

La présente invention concerne un système de découpe laser comme décrit dans le préambule de la revendication 1 (voir, par exemple, FR2982185A1).

L'invention s'applique au domaine de la découpe, notamment la découpe non débouchante, du gougeage, de l'usinage, en particulier au moyen d'un laser. L'invention est notamment susceptible d'être mise en oeuvre pour des opérations de démantèlement, en particulier en cas d'accident grave.

### ÉTAT DE LA TECHNIQUE ANTÉRIEURE

Il est connu d'avoir recours à un système de découpe laser pour découper des pièces. Dans ce cas, une tête de découpe du système de découpe laser est mise en regard d'une surface endroit d'une pièce à découper, et ladite surface endroit est irradiée avec un faisceau laser de puissance présentant une densité d'énergie suffisante pour entraîner la fusion du matériau dans lequel la pièce est réalisée. En outre, la tête de découpe est mise en mouvement parallèlement à la surface endroit pour former une saignée.

En fonction de la vitesse d'avancée de la tête de découpe par rapport à la pièce, ainsi que de la densité d'énergie du faisceau laser de puissance, une fusion du matériau est susceptible d'être obtenue sur la totalité de l'épaisseur de la pièce (découpe laser débouchante) ou sur une partie seulement de l'épaisseur de la pièce (découpe laser non débouchante).

Les découpes non débouchantes sont, par exemple, réalisées dans des pièces qui reposent sur un support trop épais, ou encore des pièces dans lesquelles une découpe traversante ne doit pas être réalisée pour des motifs d'intégrité mécanique ou de sureté.

Dans ce qui suit, la limite entre la saignée et la matière non encore fondue de la pièce, suivant la direction de déplacement de la tête de découpe sera appelée « front de coupe ». En outre, la partie de la saignée qui est la plus éloignée de la surface endroit de la pièce sera appelée « fond de saignée » ; dans le cas d'une découpe débouchante, il s'agit de la surface envers de la pièce, située à l'opposé de la surface endroit.

Dans les deux cas, le fluide que constitue la matière fondue est généralement évacué grâce aux forces d'impact et de cisaillement d'un jet de gaz dirigé vers l'intersection du front de coupe avec le fond de saignée. En d'autres termes, le jet de gaz intercepte le faisceau laser de puissance au niveau du fond de saignée durant l'émission du faisceau laser de puissance.

Néanmoins, un tel système de découpe laser ne donne pas entière satisfaction.

En effet, avec un tel système de découpe laser, pour amorcer la saignée, il est nécessaire de mettre la tête de découpe à distance de la pièce de façon à ce que le jet de gaz soit dirigé vers le point d'impact du faisceau laser de puissance avec la surface endroit de la pièce à découper, sans quoi la matière fondue à la surface ne serait pas évacuée, et la saignée ne s'amorcerait pas.

Puis, au fur et à mesure que la profondeur de la saignée (c'est-à-dire la distance entre le fond de saignée et la surface endroit) augmente, la tête de découpe est rapprochée de la surface endroit de la pièce de façon à ce que le jet de gaz soit encore dirigé vers le point d'impact du faisceau laser de puissance avec le fond de saignée.

Une telle procédure d'amorçage de saignée est fastidieuse.

En outre, si un désamorçage de la saignée a lieu, par exemple en raison d'un dysfonctionnement ponctuel, la saignée ne se réamorce généralement pas spontanément, ou alors se réamorce à une profondeur différente de sa profondeur avant désamorçage. Il est alors nécessaire de répéter la procédure d'amorçage précédemment décrite de façon à garantir une profondeur de saignée contrôlée.

Un but de l'invention est donc de proposer un dispositif de découpe laser avec lequel une telle procédure d'amorçage de saignée n'est pas requise.

### EXPOSÉ DE L'INVENTION

A cet effet, l'invention a pour objet un système de découpe laser du type comme décrit dans la revendication principale 1. Exemples de réalisation de l'invention sont décrits dans les revendications dépendantes 2 à 7.

### BRÈVE DESCRIPTION DES DESSINS

L'invention sera mieux comprise à l'aide de la description qui va suivre, donnée uniquement à titre d'exemple non limitatif et faite en se référant aux dessins annexés sur lesquels :
- la figure 1 est une représentation schématique d'un système de découpe laser non couvert par la présente invention, dont une tête de découpe est représentée en section suivant un plan d'émission associé à une buse de la tête de découpe ;
- la figure 2 est une vue en coupe de la tête de détection de la figure 1, dans un plan orthogonal à un plan d'émission de la tête de découpe ;
- la figure 3 est une vue analogue à la vue de la figure 1, le système de découpe laser étant représenté en fonctionnement, au démarrage d'une procédure de réalisation d'une saignée dans une pièce à découper ;
- la figure 4 est similaire à la figure 3, la saignée étant en cours d'amorçage ;
- la figure 5 est similaire à la figure 3, la saignée ayant été amorcée ;
- la figure 6 est une représentation schématique de la tête de découpe du système de découpe laser selon l'invention, la tête de découpe étant représentée en section suivant un plan d'émission associé à une buse de la tête de découpe ; et
- la figure 7 est une vue analogue à la vue de la figure 6, le système de découpe laser étant représenté en fonctionnement, après l'amorçage d'une saignée dans une pièce à découper.

### EXPOSÉ DÉTAILLÉ DE MODES DE RÉALISATION PARTICULIERS

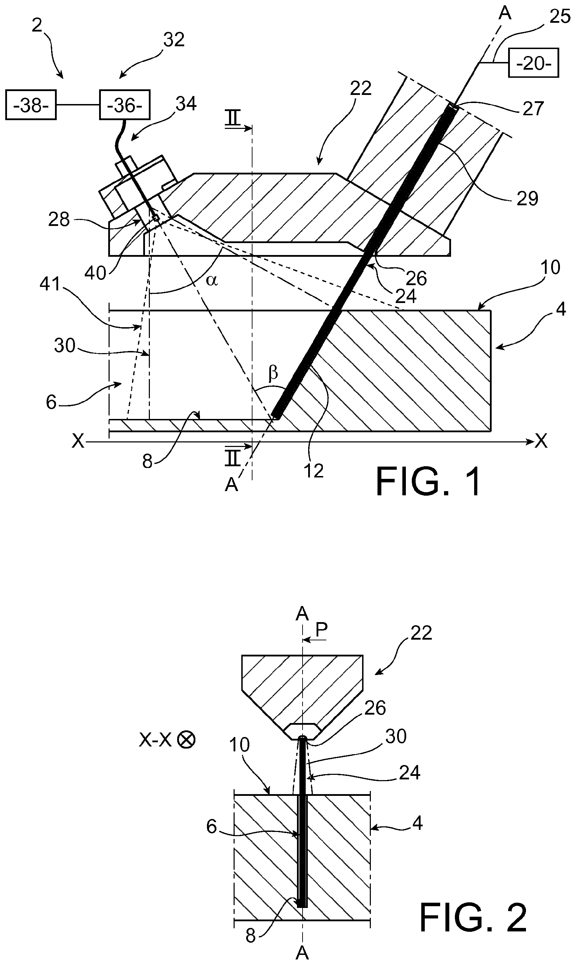

Un système de découpe laser 2 est représenté sur la figure 1. Sur cette figure 1 est également représentée une pièce 4 à découper.

Dans l'exemple de la figure 1, le système de découpe laser 2 est représenté en fonctionnement, lors de la réalisation d'une saignée 6 dans la pièce 4. La saignée 6 s'étend le long d'un axe longitudinal X-X.

La saignée 6 présente un fond de saignée 8, à distance d'une surface endroit 10 de la pièce 4. Un front de coupe 12, formant la limite entre la saignée 6 et la partie non fondue de la pièce 4, suivant l'axe longitudinal X-X, est également représentée.

Le système de découpe laser 2 comporte une source laser 20 et une tête de découpe 22.

La source laser 20 est configurée pour générer un faisceau laser de puissance 24. Le faisceau laser de puissance 24 est destiné à la découpe de la pièce 4.

Parexemple, la longueur d'onde du faisceau de puissance 24 est comprise entre 900 nm (nanomètres) et 1200 nm, de préférence entre 950 nm et 1150 nm.

Avantageusement, la source laser 20 est configurée de sorte que la puissance du faisceau laser de puissance 24 puisse être modifiée au cours du temps, par exemple commandée au moyen d'un signal de commande appliqué en entrée de la source laser 20.

La tête de découpe 22 comporte une sortie optique 26, la source laser 20 et la tête de découpe 22 coopérant de sorte que le faisceau laser de puissance 24 débouche hors de la tête de découpe 22 par la sortie optique 26 en se propageant suivant un axe de propagation A-A.

Par exemple, le faisceau laser de puissance 24 est acheminé à travers une fibre optique 25 jusqu'à un organe optique 27 de focalisation et de collimation, destiné à mettre en forme le faisceau laser de puissance 24, de préférence à collimater le faisceau laser de puissance 24. Puis, le faisceau laser de puissance 24 se propage avantageusement jusqu'à la sortie optique 26 à travers un canal 29 ménagé dans la tête de découpe 22 et débouchant à l'extérieur de la tête de découpe 22 par la sortie optique 26.

La tête de découpe 22 est mobile, de préférence selon les trois directions de l'espace. En particulier, la tête de découpe est apte à se déplacer le long de l'axe longitudinal X-X, de façon à permettre la formation de la saignée 6 s'étendant le long de l'axe longitudinal X-X, sous l'action du faisceau laser de puissance 24.

La tête de découpe 22 comporte, en outre, au moins une buse auxiliaire. Par exemple, sur la figure 1, la tête de découpe 22 comporte une unique buse auxiliaire 28.

La buse auxiliaire 28 est distante de la sortie optique 26.

La buse auxiliaire 28 est configurée pour émettre un jet de gaz 30 planaire s'étendant dans un plan d'émission P (représenté sur la figure 2) et correspondant au plan de section de la figure 1, l'axe de propagation A-A du faisceau laser de puissance 24 appartenant au plan d'émission P.

Par « jet de gaz planaire s'étendant dans un plan d'émission P », il est entendu, au sens de la présente invention, un jet de gaz 30 qui est aplati suivant une direction orthogonale au plan d'émission P.

Un tel jet de gaz 30 planaire est illustré sur la figure 2. Il apparaît sur cette figure 2 que l'axe de propagation A-A du faisceau laser de puissance 24 appartient bien au plan d'émission P défini par le jet de gaz 30 planaire issu de la buse auxiliaire 28.

Le jet de gaz 30 définit, dans le plan d'émission P, un secteur angulaire α (figure 1) dont la buse auxiliaire 28 constitue le sommet. L'angle au sommet d'un tel secteur angulaire α est, par exemple, compris entre 60° et 120°, et de préférence 70°.

De préférence, l'angle β (figure 1) formé par la bissectrice dudit secteur angulaire et l'axe de propagation A-A présente une valeur comprise entre 50 et 70°, de préférence 60°.

De préférence encore, la buse auxiliaire 28 est configurée de sorte que le jet de gaz 30 balaye la sortie optique 26.

De préférence, le système de découpe 2 comporte également un étage d'analyse 32 pour analyser la découpe.

L'étage d'analyse 32 comporte un dispositif optique 34 de collection de lumière, un détecteur 36 et un calculateur 38.

Le dispositif optique 34 est configuré pour collecter de la lumière en provenance de la saignée 6, et plus particulièrement de la lumière provenant d'une zone de la saignée 6 comprenant le front de coupe 12.

En particulier, le dispositif optique 34 comporte un organe de collection de lumière 40 définissant un champ de collection 41 du dispositif optique 34.

L'organe de collection de lumière 40 est agencé de sorte que le champ de collection 41 intercepte au moins une partie d'une zone d'intersection de l'axe de propagation A-A avec le plan d'émission P, de préférence une zone d'intersection de l'axe de propagation A-A avec le jet de gaz 30. Dans ce cas, lors du fonctionnement du système de découpe 2, au moins une partie du front de coupe 12, de préférence la totalité du front de coupe 12, se trouve dans le champ de collection 41 de l'organe de collection de lumière 40, c'est-à-dire dans le champ de collection 41 du dispositif optique 34.

Avantageusement, l'organe de collection de lumière 40 est logé dans la buse auxiliaire 28. Ceci est avantageux, dans la mesure où le jet de gaz émis par la buse auxiliaire 28 protège l'organe de collection de lumière en assurant son refroidissement et en repoussant les fumées, poussières et matières incandescentes générées lors de la découpe au moyen du faisceau laser de puissance 24.

Dans ce cas, dans le plan d'émission P, le champ de collection 41 se superpose au moins partiellement au jet de gaz 30 issu de la buse auxiliaire 28.

Le dispositif optique 34 est, de préférence, un fibroscope. Dans ce cas, le fibroscope est, avantageusement, logé dans un circuit d'alimentation du la buse auxiliaire 28 en gaz. Ceci est avantageux, dans la mesure où, de par les faibles dimensions du fibroscope, en particulier le faible diamètre de celui-ci, les perturbations induites pas le fibroscope sur le jet de gaz émis par la buse auxiliaire 28 sont négligeables.

En outre, le recours à un fibroscope permet de déporter le détecteur 36 et/ou le calculateur 38 à l'écart de la tête de découpe 22, ce qui permet de réduire l'encombrement de la tête de découpe 22. Un tel déport protège, en outre, le détecteur 36 des rayonnements ionisants générés au cours de la découpe, et auxquels le détecteur 36 est susceptible d'être sensible.

Le détecteur 36 est configuré pour générer un signal électrique de détection représentatif d'une lumière collectée par le dispositif optique 34.

Avantageusement, le détecteur 36 est insensible à la longueur d'onde du faisceau laser de puissance 24.

Par « détecteur insensible à une longueur d'onde », il est entendu, au sens de la présente invention, que la sensibilité du détecteur à un rayonnement présentant ladite longueur d'onde est inférieure ou égale à un centième de la sensibilité maximale du détecteur.

Par exemple, le détecteur 36 est formé par une matrice de photodétecteurs devant laquelle est agencé un filtre optique configuré pour rejeter et/ou absorber les photons dont la longueur d'onde est égale à la longueur d'onde du faisceau laser de puissance 24.

Le calculateur 38 est configuré pour déterminer, à partir du signal électrique de détection, des informations relatives à la pièce 4 et/ou au déroulement de la découpe.

Notamment, le calculateur 38 est configuré pour fonctionner dans un mode dit « profondimètre ».

Dans un tel mode, le calculateur 38 mesure un profil d'irradiance dans le champ de collection du dispositif optique 34.

Par exemple, le détecteur 36 est configuré pour générer un signal électrique de détection codant une image. Dans ce cas, le détecteur 38 est configuré pour associer, à chaque pixel de l'image, une valeur d'irradiance du point correspondant du champ de collection du dispositif optique 34. Une telle valeur est, par exemple, une fonction de l'intensité du pixel.

Puis, après la mesure du profil d'irradiance, le calculateur 38 détecte le front de coupe 12 de la saignée 6 comme étant une zone dont l'irradiance est supérieure ou égale à un seuil. En effet, la matière fondue du front de coupe 12 étant plus chaude que la matière présente au niveau du fond de saignée 8, l'irradiance de la première est plus importante.

Puis, le calculateur 38 détermine des informations relatives à une géométrie et/ou une position dans l'espace du front de coupe 12 détecté.

Par exemple, de telles informations comprennent une localisation d'un début du front de coupe 12 (c'est-à-dire l'intersection du front de coupe 12 avec la surface endroit 10), la longueur du front de coupe 12 ou encore son orientation dans un repère prédéterminé.

Puis, le calculateur 38 transmet les informations déterminées à un opérateur, par exemple pour permettre à l'opérateur de guider le déplacement de la tête de découpe 22.

En variante, le calculateur 38 est configuré pour utiliser les informations déterminées afin de :
- réguler une distance entre la tête de découpe 22 et la surface endroit 10 de la pièce 4, par exemple au moyen d'un asservissement de distance ; et/ou
- pour réguler une trajectoire de la tête de découpe 22, par exemple au moyen d'un asservissement de position ;
- pour réguler une profondeur de la saignée 6, par exemple au moyen d'un asservissement de la vitesse d'avancée de la tête de découpe 22 et/ou un asservissement de la puissance du faisceau laser de puissance 24 généré par la source laser 20.

Avantageusement, la source laser 20 est également configurée pour générer, outre le faisceau laser de puissance 24, un faisceau laser pilote.

Le faisceau laser pilote présente une longueur d'onde distincte de la longueur d'onde du faisceau laser de puissance 24. En outre, la source laser 20 et la tête de découpe 22 coopèrent de sorte que le faisceau laser pilote soit coaxial avec le faisceau laser de puissance 24.

Dans ce cas, le détecteur est sensible à la longueur d'onde du faisceau laser pilote.

Par « détecteur sensible à une longueur d'onde », il est entendu, au sens de la présente invention, que la sensibilité du détecteur à un rayonnement présentant ladite longueur d'onde est supérieure à un centième de la sensibilité maximale du détecteur.

Dans ce cas, le calculateur 38 est configuré pour fonctionner dans un mode dit « télémètre ».

Dans un tel mode, le calculateur détecte, à partir du signal électrique de détection, un point d'impact du faisceau laser pilote avec une surface de la pièce 4.

Par exemple, le détecteur 36 est configuré pour générer un signal électrique de détection codant une image. Dans ce cas, le détecteur 38 détecte un ensemble de pixels qui présentent la plus grande intensité comme correspondant à la zone, dans le champ de collection du dispositif optique 34, où le faisceau laser pilote irradie la surface de la pièce 4.

Puis, le calculateur 38 détermine la position du point d'impact dans un repère prédéterminé, par exemple grâce à un algorithme de triangulation optique.

La position du point d'impact qui a été déterminée est représentative de la distance séparant la tête de découpe 22 de la surface de la pièce 4.

Puis, le calculateur 38 transmet la position du point d'impact qui a été déterminée et/ou la distance séparant la tête de découpe 22 de la surface de la pièce 4 à un opérateur, par exemple pour permettre à l'opérateur de guider le déplacement de la tête de découpe 22.

En variante, le calculateur 38 est configuré pour utiliser les informations déterminées afin de
- réguler une distance entre la tête de découpe 22 et la surface de la pièce 4, par exemple au moyen d'un asservissement de distance ; et/ou
- effectuer un relevé de profil de la pièce 4 en déplaçant la tête de découpe 22.

L'aptitude du fonctionnement du calculateur 38 dans le mode télémètre ne requiert pas son aptitude à fonctionner dans le mode profondimètre, et inversement.

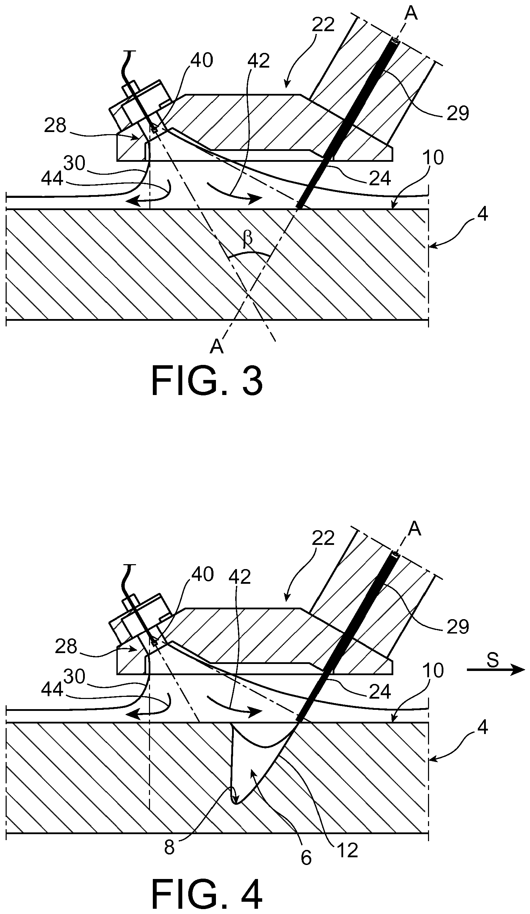

Le fonctionnement du système de découpe 2 va maintenant être décrit en référence aux figures 3 à 5.

Comme illustré par la figure 3, la tête de découpe 22 est positionnée à une distance prédéterminée de la surface endroit 10 de la pièce 4.

A titre d'exemple, dans le cas où le système de découpe 2 comporte un étage d'analyse 32, la distance entre la tête de découpe 22 et la surface endroit 10 de la pièce 4 est déterminée par le calculateur 38 fonctionnant en mode « télémètre ».

La buse auxiliaire 28 est alimentée en gaz, par exemple de l'air, depuis un circuit d'alimentation en gaz. La pression du gaz au niveau de la buse auxiliaire 28 vaut, de préférence, quelques bars, par exemple 10 bar.

Le jet de gaz 30 planaire issu de la buse auxiliaire 28 impacte la surface endroit 10 de la pièce 4 et se scinde en un flux de gaz avant 42 évacué dans une première direction dans le plan d'impact P et un flux de gaz arrière 44 évacué dans une deuxième direction dans le plan d'impact P opposée à la première direction.

La source laser 20 est enclenchée, et le faisceau laser de puissance 24 irradie la pièce 4, faisant fondre la matière de la pièce 4.

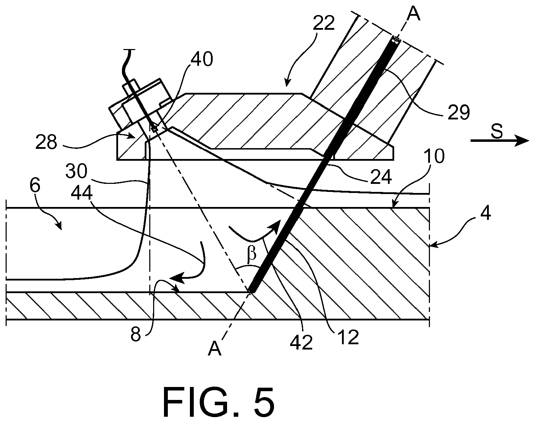

Puis la tête de découpe 22 est mise en mouvement. Par exemple, sur les figures 4 et 5, le mouvement de la tête de découpe 22 est illustré par la flèche S.

Au cours de l'amorçage de la saignée 6, illustré par la figure 4, sous l'effet du faisceau laser de puissance 24, le jet de gaz 30, du fait de son caractère planaire, s'engouffre dans la saignée 6 en cours d'amorçage et éjecte la matière mise en fusion par le faisceau laser de puissance 24. Le rapprochement ou l'écartement relatif de la tête de découpe 22 et de la pièce 4 n'est pas requis au cours de l'amorçage de la saignée 6.

Après l'amorçage de la saignée 6, ladite saignée 6 présente une profondeur voulue (figure 5). Une telle profondeur est, notamment, fonction de la vitesse de déplacement de la tête de découpe 22 et de la puissance du faisceau laser de puissance 24.

Du fait des orientations relatives entre le jet de gaz 30 et l'axe de propagation A-A, par exemple du fait de l'angle β entre la bissectrice du jet de gaz 30 et l'axe de propagation A-A, dans le plan d'émission P, le flux de gaz 30, en particulier le flux de gaz avant, conduit à la remontée de la matière fondue le long du front de coupe 12, ce qui conduit à l'effet avantageux que la matière fondue ne se redépose pas dans la saignée 6 au fur et à mesure que la saignée 6 est formée du fait du déplacement de la tête de découpe 22.

Il ressort de ce qui précède que le jet de gaz 30, du fait de son caractère planaire, s'engouffre dans la saignée 6 quel que soit le stade de formation de la saignée, et éjecte la matière mise en fusion par le faisceau laser de puissance 24. Le rapprochement ou l'écartement relatif de la tête de découpe 22 et de la pièce 4 n'est pas requis au cours de l'amorçage de la saignée 6. En particulier, en cas de désamorçage de la saignée, aucune procédure particulière n'est requise pour amorcer de nouveau la saignée.

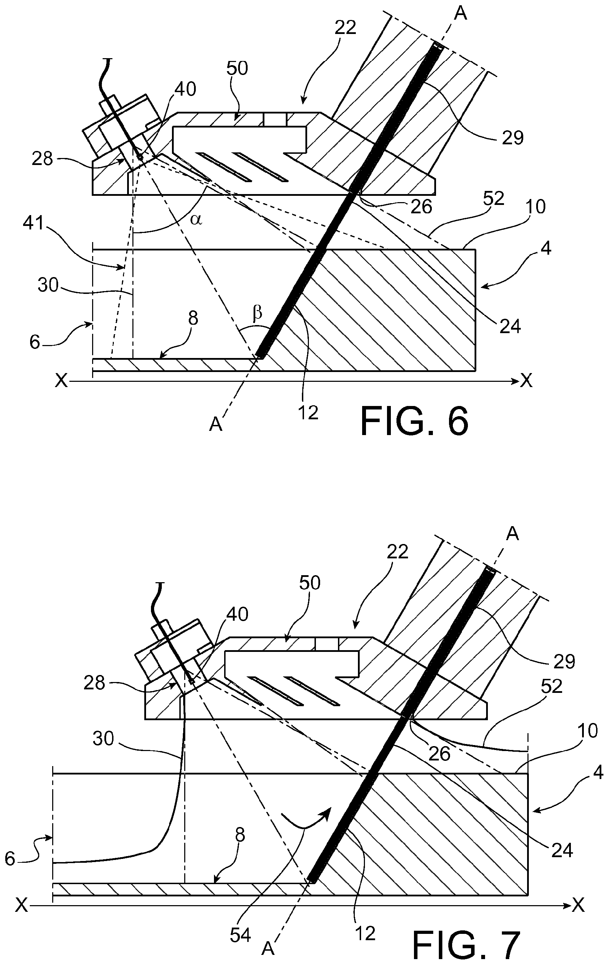

Selon la présente invention, étant une variante du système de découpe 2 précédemment décrit, illustrée par la figure 6, la tête de découpe 22 comporte une deuxième buse auxiliaire 50.

La deuxième buse auxiliaire 50 est, par exemple, agencée entre la buse auxiliaire 28 et la sortie optique 26.

En outre, la deuxième buse auxiliaire 50 est configurée pour générer un jet de gaz 52 qui balaye la sortie optique 26. De préférence, le jet de gaz 52 est un jet de gaz planaire s'étendant dans le plan d'émission P du jet de gaz 30 issu de la buse auxiliaire 28.

Avantageusement, les buses auxiliaires 28, 50 sont configurées de sorte qu'il existe une continuité entre le jet de gaz 30 issu de la buse auxiliaire 28 et le jet de gaz 52 issu de la deuxième buse auxiliaire 50.

Grâce à une telle tête de découpe 22, dans des conditions où la pièce 4 se trouve dans l'eau, les jets de gaz issus des buses auxiliaires 28, 50 forment, entre la sortie optique 26 et la surface endroit 10 de la pièce 4, une cavité sèche dans laquelle le faisceau laser de puissance 24 est amené à se propager. Dans ce cas, le faisceau laser de puissance 24 se propage, depuis la sortie optique 26 jusqu'à la pièce 4, uniquement dans le gaz issu des buses auxiliaires 28, 50.

La formation d'une telle cavité sèche est particulièrement avantageuse, dans la mesure où l'eau présente un coefficient d'absorption inacceptable dans les gammes de longueurs d'onde utilisées pour la découpe laser. Par exemple, pour une longueur d'onde comprise entre 1000 nm (nanomètres) et 1100 nm, le coefficient d'absorption de l'eau présente une valeur d'environ 0,1 cm⁻¹ (par centimètre) à 0,2 cm⁻¹.

En outre, sous l'effet du faisceau laser de puissance, l'eau se vaporise, la vapeur d'eau perturbant le trajet du faisceau laser de puissance. En outre, l'eau favorise la formation d'oxydes; la modification locale des propriétés chimiques de la pièce 4 complique le contrôle de la découpe. En outre, une telle cavité sèche limite la formation de scories dans la saignée 6 et son obstruction par celles-ci.

La formation d'une cavité sèche entre la sortie optique 26 et la pièce 4 permet de s'affranchir de ces inconvénients généralement liés à la découpe laser dans l'eau.

En outre, et comme illustré par la figure 7, les buses auxiliaires 28, 50 sont agencées de sorte qu'une partie 54 des jets de gaz 30, 52 issus de la tête de découpe 22 remonte le long du front de coupe 12, depuis le fond de saignée 8 vers la surface endroit 10 de la pièce 4, pour évacuer la matière fondue le long du front de coupe 12 jusqu'à l'extérieur de la saignée 6.

## Revendications

1. Système de découpe laser (2), comportant une tête de découpe (22) et une source laser (20), la tête de découpe (22) comprenant une sortie optique (26), la source laser (20) étant configurée pour générer un faisceau laser de puissance (24), la tête de découpe (22) et la source laser (20) étant configurées de sorte que le faisceau laser de puissance (24) débouche hors de la tête de découpe (22) par la sortie optique (26) en se propageant suivant un axe de propagation (A-A),
le système de découpe laser (2) étant **caractérisé en ce que** la tête de découpe (22) comprend, en outre, une première buse auxiliaire (28) et une deuxième buse auxiliaire (50), chaque buse auxiliaire (28, 50) étant distante de la sortie optique (26) et configurée pour émettre un jet de gaz (30, 52) planaire s'étendant dans un plan d'émission (P), l'axe de propagation (A-A) du faisceau laser de puissance (24) appartenant au plan d'émission (P), et
la deuxième buse auxiliaire (50) étant agencée de sorte que le jet de gaz (52) émis par la deuxième buse auxiliaire (50) balaye la sortie optique (26).

2. Système de découpe laser (2) selon la revendication 1, dans lequel la deuxième buse auxiliaire (50) est agencée entre la première buse auxiliaire (28) et la sortie optique (26), le jet de gaz (52) émis par la deuxième buse auxiliaire (50) étant un jet de gaz planaire s'étendant dans le plan d'émission P du jet de gaz (30) émis par la buse auxiliaire (28).

3. Système de découpe laser (2) selon la revendication 2, dans lequel les première et deuxième buses auxiliaires (28, 50) sont configurées de sorte qu'il existe une continuité entre le jet de gaz (30) émis par la buse auxiliaire (28) et le jet de gaz (52) émis par la deuxième buse auxiliaire (50).

4. Système de découpe laser (2) selon l'une quelconque des revendications 1 à 3, comportant, en outre, un dispositif optique (34), de préférence un fibroscope, comprenant un organe de collection de lumière (40) présentant un champ de collection (41), le dispositif optique (34) étant agencé de sorte que le champ de collection (41) de l'organe de collection de lumière (40) intercepte au moins une partie d'une zone d'intersection de l'axe de propagation (A-A) avec le plan d'émission (P).

5. Système de découpe laser (2) selon la revendication 4, dans lequel l'organe de collection de lumière (40) est agencé dans l'une parmi la première et la deuxième buse auxiliaire (28, 50).

6. Système de découpe laser (2) selon la revendication 4 ou 5, comprenant, en outre, un détecteur (36) et un calculateur (38), le détecteur (36) étant configuré pour générer un signal électrique de détection représentatif d'une lumière collectée par l'organe de collection de lumière (40), le détecteur étant insensible à la longueur d'onde du faisceau laser de puissance (24), le calculateur (38) étant configuré pour fonctionner dans un mode dit « profondimètre », dans lequel le calculateur (38) :
- mesure un profil d'irradiance dans le champ de collection (41) de l'organe de collection de lumière (40) ;
- détecte un front de coupe (12) d'une saignée (6) comme étant une zone dont l'irradiance est supérieure ou égale à un seuil ;
- détermine des informations relatives à une géométrie et/ou une position dans l'espace du front de coupe (12) détecté.

7. Système de découpe laser (2) selon l'une quelconque des revendications 4 à 6, dans lequel la source laser (20) est configurée pour générer un faisceau laser pilote présentant une longueur d'onde distincte de la longueur d'onde du faisceau laser de puissance (24), le faisceau laser pilote étant coaxial avec le faisceau laser de puissance (24),
le système de découpe laser (2) comprenant, en outre, un détecteur (36) et un calculateur (38), le détecteur (36) étant configuré pour générer un signal électrique de détection représentatif d'une lumière collectée par l'organe de collection de lumière (40), le détecteur (36) étant sensible à la longueur d'onde du faisceau laser pilote,
le calculateur (38) étant configuré pour fonctionner dans un mode dit « télémètre », dans lequel le calculateur (38) :
- détecte, à partir du signal de détection, un point d'impact du faisceau laser pilote avec une surface d'une pièce (4) à découper ; et
- détermine la position du point d'impact dans un repère prédéterminé.

## Patentansprüche

1. Laserschneidesystem (2), das einen Schneidekopf (22) und eine Laserquelle (20) beinhaltet, wobei der Schneidekopf (22) einen optischen Ausgang (26) umfasst, die Laserquelle (20) konfiguriert ist, um einen Leistungslaserstrahl (24) zu erzeugen, der Schneidekopf (22) und die Laserquelle (20) derart konfiguriert sind, dass der Leistungslaserstrahl (24) durch den optischen Ausgang (26) hindurch aus dem Schneidekopf (22) heraus mündet, indem er sich entlang einer Ausbreitungsachse (A-A) ausbreitet,
wobei das Laserschneidesystem (2) **dadurch gekennzeichnet ist, dass** der Schneidekopf (22) weiter eine erste Hilfsdüse (28) und eine zweite Hilfsdüse (50) umfasst, wobei jede Hilfsdüse (28, 50) von dem optischen Ausgang (26) beabstandet ist und konfiguriert ist, um einen planaren Gasstrahl (30, 52) zu emittieren, der sich in einer Sendeebene (P) erstreckt, wobei die Ausbreitungsachse (A-A) des Leistungslaserstrahls (24) der Emissionsebene (P) angehört, und
die zweite Hilfsdüse (50) derart angeordnet ist, dass der von der zweiten Hilfsdüse (50) emittierte Gasstrahl (52) den optischen Ausgang (26) durchflutet.

2. Laserschneidesystem (2) nach Anspruch 1, wobei die zweite Hilfsdüse (50) zwischen derersten Hilfsdüse (28) und dem optischen Ausgang (26) angeordnet ist, wobei der von der zweiten Hilfsdüse (50) emittierte Gasstrahl (52) ein planarer Gasstrahl ist, der sich in der Emissionsebene P des von der Hilfsdüse (28) gesendeten Gasstrahls (30) erstreckt.

3. Laserschneidesystem (2) nach Anspruch 2, wobei die erste und zweite Hilfsdüse (28, 50) derart konfiguriert sind, dass eine Kontinuität zwischen dem von der Hilfsdüse (28) emittierten Gasstrahl (30) und dem von der zweiten Hilfsdüse (50) emittierten Gasstrahl (52) besteht.

4. Laserschneidesystem (2) nach einem der Ansprüche 1 bis 3, das weiter eine optische Vorrichtung (34), vorzugsweise ein Fibroskop, beinhaltet, welches ein Lichtsammelorgan (40) umfasst, das ein Sammelfeld (41) aufweist, wobei die optische Vorrichtung (34) derart angeordnet ist, dass das Sammelfeld (41) des Lichtsammelorgans (40) mindestens einen Teil eines Kreuzungsbereichs der Ausbreitungsachse (A-A) mit der Emissionsebene (P) abfängt.

5. Laserschneidesystem (2) nach Anspruch 4, wobei das Lichtsammelorgan (40) in der einen der ersten und der zweiten Hilfsdüse (28, 50) angeordnet ist.

6. Laserschneidesystem (2) nach Anspruch 4 oder 5, das weiter einen Detektor (36) und einen Rechner (38) umfasst, wobei der Detektor (36) konfiguriert ist, um ein elektrisches Detektionssignal zu erzeugen, das repräsentativ für ein von dem Lichtsammelorgan (40) gesammeltes Licht ist, wobei der Detektor unempfindlich für die Wellenlänge des Leistungslaserstrahls (24) ist, wobei der Rechner (38) konfiguriert ist, um in einem sogenannten "Tiefenmesser"-Modus zu funktionieren, wobei der Rechner (38):
- ein Bestrahlungsstärkenprofil in dem Sammelfeld (41) des Lichtsammelorgans (40) misst;
- eine Schnittfront (12) eines Schlitzes (6) als einen Bereich detektiert, dessen Bestrahlungsstärke größer oder gleich einer Schwelle ist;
- Informationen in Bezug auf eine Geometrie und/oder eine Position im Raum der detektierten Schnittfront (12) bestimmt.

7. Laserschneidesystem (2) nach einem der Ansprüche 4 bis 6, wobei die Laserquelle (20) konfiguriert ist, um einen Pilotlaserstrahl zu erzeugen, der eine andere Wellenlänge als die Wellenlänge des Leistungslaserstrahls (24) aufweist, wobei der Pilotlaserstrahl koaxial mit dem Leistungslaserstrahl (24) ist;
wobei das Laserschneidesystem (2) weiter einen Detektor (36) und einen Rechner (38) umfasst, wobei der Detektor (36) konfiguriert ist, um ein elektrisches Detektionssignal zu erzeugen, das repräsentativ für ein vom Lichtsammelorgan (40) gesammeltes Licht ist, wobei der Detektor (36) empfindlich für die Wellenlänge des Pilotlaserstrahls ist,
wobei der Rechner (38) konfiguriert ist, um in einem sogenannten "Entfernungsmesser"-Modus zu funktionieren, wobei der Rechner (38):
- aus dem Detektionssignal einen Auftreffpunkt des Pilotlaserstrahls mit einer Oberfläche eines auszuschneidenden Werkstücks (4) detektiert; und
- die Position des Auftreffpunkts in einem vorbestimmten Bezugspunkt bestimmt.

## Claims

1. A laser cutting system (2), including a cutting head (22) and a laser source (20), the cutting head (22) comprising an optical output (26), the laser source (20) being configured to generate a power laser beam (24), the cutting head (22) and the laser source (20) being configured such that the power laser beam (24) emerges out of the cutting head (22) via the optical output (26) by propagating along a propagation axis (A-A),
the laser cutting system (2) being **characterised in that** the cutting head (22) further comprises a first auxiliary nozzle (28) and a second auxiliary nozzle (50), each auxiliary nozzle (28, 50) being distant from the optical output (26) and configured to emit a planar gas jet (30, 52) extending in an emission plane (P), the propagation axis (A-A) of the power laser beam (24) belonging to the emission plane (P), and
the second auxiliary nozzle (50) being arranged such that the gas jet (52) emitted by the second auxiliary nozzle (50) scans the optical output (26).

2. The laser cutting system (2) according to claim 1, wherein the second auxiliary nozzle (50) is arranged between the first auxiliary nozzle (28) and the optical output (26), the gas jet (52) emitted by the second auxiliary nozzle (50) being a planar gas jet extending in the emission plane P of the gas jet (30) emitted by the auxiliary nozzle (28).

3. The laser cutting system (2) according to claim 2, wherein the first and second auxiliary nozzles (28, 50) are configured such that there is a continuity between the gas jet (30) emitted by the auxiliary nozzle (28) and the gas jet (52) emitted by the second auxiliary nozzle (50).

4. The laser cutting system (2) according to any one of claims 1 to 3, further including an optical device (34), preferably a fiberscope, comprising a light collection member (40) having a collection field (41), the optical device (34) being arranged such that the collection field (41) of the light collection member (40) intercepts at least one portion of a zone of intersection of the propagation axis (A-A) with the emission plane (P).

5. The laser cutting system (2) according to claim 4, wherein the light collection member (40) is arranged in one of the first and second auxiliary nozzles (28, 50).

6. The laser cutting system (2) according to claim 4 or 5, further comprising a detector (36) and a calculator (38), the detector (36) being configured to generate an electrical detection signal representative of a light collected by the light collection member (40), the detector being insensitive to the wavelength of the power laser beam (24), the calculator (38) being configured to operate in a mode called "depth gauge" mode, in which the calculator (38):
- measures an irradiance profile in the collection field (41) of the light collection member (40);
- detects a cutting front (12) of a kerf (6) as being a zone whose irradiance is greater than or equal to a threshold;
- determines information relating to a geometry and/or a position in space of the detected cutting front (12).

7. The laser cutting system (2) according to any one of claims 4 to 6, wherein the laser source (20) is configured to generate a pilot laser beam having a wavelength distinct from the wavelength of the power laser beam (24), the pilot laser beam being coaxial with the power laser beam (24),
the laser cutting system (2) further comprising a detector (36) and a calculator (38), the detector (36) being configured to generate an electrical detection signal representative of a light collected by the light collection member (40), the detector (36) being sensitive to the wavelength of the pilot laser beam,
the calculator (38) being configured to operate in a mode called "rangefinder" mode, in which the calculator (38):
- detects, from the detection signal, a point of impact of the pilot laser beam with a surface of a part (4) to be cut; and
- determines the position of the point of impact in a predetermined reference frame.
